# EUROPEAN PATENT APPLICATION

(11) **EP 4 209 912 A1**
(43) Date of publication of application: **12.07.2023**
(21) Application number: 22150405.3
(22) Date of filing: 06.01.2022
(51) Int. Cl.: G06F 11/36

(54) **METHOD FOR ENHANCING THE DEBUGGING CAPABILITY FOR A SOFTWARE PROGRAM**

(71) Applicant: Siemens Aktiengesellschaft, 80333 München (DE)
(72) Inventor: ANFONSO, Daniele, 16133 Genova (IT); BISSO, Luca, 16145 Genova (IT); CABIGIOSU, Claudia, 16148 Genova (IT); MERCADANTE, Daniela, 16137 Genova (IT); SIRNI, Luigi, 98168 Messina (IT)
(74) Representative: Siemens Patent Attorneys

(57) **Abstract**

It is the object of the present invention to provide a method for enhancing the debugging capability for a software program being executed on at least one resource of an industrial environment that is controlled by a manufacturing operation management system (MOM system) that enables a faster and easier debugging and interpretation functionality on software incidents occurring during the execution of the business logic on a production resources.

This objective is achieved according to the present invention by a method for enhancing the debugging capability for a software program being executed on at least one resource of an industrial environment that is controlled by a manufacturing operation management system (MOM system), said method comprising the steps of:
a) source-coding a number of software routines in order to achieve under execution of the software routine a logical result, said software routines being comprised in the software program;
b) adding to each software routine a code section indicative for the achievement of the logical result wherein said code section generates a retrievable output in response to the execution of the software routine;
c) controlling the at least one resource to execute the number of software routines; and
d) running an analysis tool being enabled to provide the retrievable outputs deducted from the execution of the number of software routines in a separate analysis report.

Thus, the operator at debugging level does not need to have a deep knowledge on the debugging tools and does not need to have a deep insight into the architecture of the business logic in terms of the its source code. Thus, it is possible to gather specific parameters or information on the execution engine in a well-structured form since each code section provides an information on whether the logical result of this associated software routine has been achieved or not. As a business impact this will imply shorter time to manage incidents resulting in a faster incident root cause analysis, reduced customer response time, increased customer satisfaction and increased customer support efficiency. From a technical perspective, this method also required less skilled operators to perform the incident root cause analysis.

## Description

The present invention relates to a method for enhancing the debugging capability for a software program being executed on at least one resource of an industrial environment that is controlled by a manufacturing operation management system (MOM system).

In the world of process automation and process monitoring standard automation systems for controlling the widest conceivable variety of production resources, machines and plants (MOM objects) are state of the art. Such technology covers in particular a broad range of products which are offered by the Siemens Corp. under its OpCenter^{®} product family within the field of manufacturing operation management (MOM). An extensive line of products solving the technical tasks in question, such as conveying, machining, counting, measuring, positioning, motion control, closed-loop control and cam control, enhance the performance capabilities of appropriate process controllers. A variety of configurations enable the implementation of flexible machine concepts.

In this context, a broad range of IT solutions exist to connect the actual hardware close to the technical and/or logistical process to the application layer of the client driving the installation. Manufacturing execution systems (MES) have therefore been developed to meet all of the requirements of a service-oriented architecture (SOA) to integrate seamlessly into a totally integrated automation (TIA). A plug & play architecture, in which the individual functions can be configured and easily combined with each other thereby forms the basis for this success thereby also simplifying the complex structures of controlling a manufacturing plant or the like.

These demands very often require in the backbone rather complicated and sophisticated software solutions which enable the approach of totally integrated automation. In view of this, the software engineers very often use production modeling software to define the plant model and its standard operating procedures and create the respective new software by means of a high-level graphical language which identifies the workflow of activities within the software. Subsequently, this string/term of high-level graphical language is translated into a client based software language executable on the machine language level. This translation requires tremendous efforts in programming and need serious testing to check whether the translated program behaves the same as the original string/term of the high level graphical language.

Within this MES environment a software for a detailed production scheduling (PDS) is provided which concerns the sequencing and the timing of production operations on all manufacturing resources. This software has the aim to create an executable and optimized production schedule that will be executed in production. Before the schedule will be computed, the PDS software needs to be fed with the main input from a plant database such as:
a) the plant logical layout and material flow constraints;
b) the equipment and personnel standard production rates;
c) the availability, the calendar and the status fo the equipment and personnel;
d) knowledge on the way of production (recipes, routings, etc.), process and business constraints;
e) the skills provided by the production resources

Together with this information the PDS software builds its internal model of the plant and of the production process within this plant. Subsequently, by applying the scheduling algorithms to this internal plant model of the plant's resources (MOM objects) and production process, the PDS software computes an executable production schedule which does not violate any physical, logistical and/or business constraints and which optimizes the manufacturing performance.

At this stage, it is not difficult to understand that a number of plant and/or machine operators need to interact with the MOM system by means of user interfaces (UI) that are provided on customizable MES screens (UI clients) being displayed on fixed workstations and/or on mobile tablets and the like. Very often, these plant and/or machine operators need to deploy new software modules and/or updates of existing software modules. Due to the complexity of a modern MOM system, there does not exist any longer the concept of a single software instance that can be deployed in a single data center of the MOM system. The MOM software is modularized and distributed in many different levels (machine level, edge device level, data center level,plant level, cloud (private or public) and so on).

Nonewithstanding the afore-mentioned, during the production process incidents, disturbances and other failures may occur during the execution of the complex MOM software products. These incidents/disturbances usually require a proper incident root cause analysis wherein often production logs are not detailed enough to allow for an efficient analysis. It may therefore be useful to scrape more information from the memory of any process involved in the incident to better outline the context in which the incident has occurred.

Up to now, this analysis has to be done manually, by means of high skilled operators using debugging tools. Therefore, this analysis requires a high level of knowledge on debugging tools and a clear understanding of the debugged software. Moreover, the current approach needs to have access to the source code repository of that specific software program. Thus, these analysis methods are highly agnostic towards the business logic. Of course, it is possible to use generic functionalities to inspect specific parameters or information, such as threads, memory, data handles, CPU, etc., over the execution engine (e.g. OS, VM, etc.). Therefore, it is the duty of the operator performing the debugging to exploit these functionalities: aggregate information and under the state of the business logic (i.e. where the problem occurred). This involves high debugging knowledge on debugging techniques as well as a deep know-how on the software program (application) architecture and usually also access to the data and source code repository. Thus, the debugging may become a huge problem during the software maintenance phase as the operators supporting the software product are usually not the same operators which developed the software.

Thus, it is therefore the object of the present invention to provide a method for enhancing the debugging capability for a software program being executed on at least one resource of an industrial environment that is controlled by a manufacturing operation management system (MOM system) that enables a faster and easier debugging and interpretation functionality on software incidents occurring during the execution of the business logic on a production resources.

This objective is achieved according to the present invention by a method for enhancing the debugging capability for a software program being executed on at least one resource of an industrial environment that is controlled by a manufacturing operation management system (MOM system), said method comprising the steps of:
a) source-coding a number of software routines in order to achieve under execution of the software routine a logical result, said software routines being comprised in the software program;
b) adding to each software routine a code section indicative for the achievement of the logical result wherein said code section generates a retrievable output in response to the execution of the software routine;
c) controlling the at least one resource to execute the number of software routines; and
d) running an analysis tool being enabled to provide the retrievable outputs deducted from the execution of the number of software routines in a separate analysis report.

Thus, the operator at debugging level does not need to have a deep knowledge on the debugging tools and does not need to have a deep insight into the architecture of the business logic in terms of the its source code. Thus, it is possible to gather specific parameters or information on the execution engine in a well-structured form since each code section provides an information on whether the logical result of this associated software routine has been achieved or not. As a business impact this will imply shorter time to manage incidents resulting in a faster incident root cause analysis, reduced customer response time, increased customer satisfaction and increased customer support efficiency. From a technical perspective, this method also required less skilled operators to perform the incident root cause analysis.

Suitably, the analysis report can be displayed on a GUI for debugging purposes. This report may have for example the form of a statement report where all results in terms of the retrievable outputs can be queried by a simple status query. This statement report may comprise for example a list of statements regarding the logical result in terms of the variable TRUE indicating that the logical result has been achieved or FALSE indicating that the logical result has not been achieved. This information thus indicates whether for example a data output/input has been generated accordingly etc.

In a preferred embodiment of the present invention, the code section may be designed as a decorator associated with the source code of the software routine, thereby tagging class definitions, properties and methods. These decorators can be used directly in the source code of the software routine/application thus enabling the programmer to tag class definitions, properties and methods representing the retrievable output of the decorator's code section.

Suitably, the decorator may be additionally enabled to own attributes that are being used to complete the configuration of the decorator and being used during a debugging event.

These attributes can be one or more of the following:
i) a section attribute that is used to aggregate input and/or output data;
ii) a regular expression attribute that is used to mark a state, like a warning or the like, if matched;
iii) an alias name attribute which is used to specify readable information in terms of contextualization;
iv) a chart name attribute being used to cluster data values in a chart; and
v) a Max/Min instance attribute being used to set the limit on a number of instances of a class type or a running method, preferably based on which instance a warning is highlighted in the analysis report.

In order to properly implement the decorator, the decorator may be coded at the phase of source-coding and is translated by a pre-compiler into static metadata; said metadata preferably comprising all associations among symbolic names of classes, properties and methods and their decoration.

In the industrial manufacturing environment, the software routines are typically one or more of the following operations:
a) generating a data output;
b) receiving a data input;
c) performing a logical operation on the data output and/or the data input, optionally in combination with the use of further process data.

Correspondingly, the logical result can be one or more of the following results:
a) indicating that a data output has been generated properly or has failed;
b) indicating that a data input has been received properly or the reception of the data input has failed; and
c) indication that the execution of the logical operation has been completed properly or has failed.

Further preferred embodiments of the present invention can be taken from the remaining depending claims.

Preferred examples of the present invention are discussed in detail below with reference to the following drawing which depicts in:
- Figure 1: a schematic overview of a manufacturing operation management system and the computational resources distributed in the MOM system;
- Figure 2: a schematic overview of the workflow when a support engineer needs to perform an incident root cause analysis in a production facility;
- Figure 3: a schematic code annotation syntax example for the enhancement of an easier incident handling; here an example for the proposal of the report is displayed in the section "Summary";
- Figure 4: a schematic code annotation syntax example for the enhancement of an easier incident handling; here the section "Statistics" is displayed;
- Figure 5: a schematic code annotation syntax example for the enhancement of an easier incident handling; here the section "Output summary" (a) and the section "Initial code section results" (b) are displayed; and
- Figure 6: a schematic code annotation syntax example for the enhancement of an easier incident handling; here the section "Exceptions" is displayed.

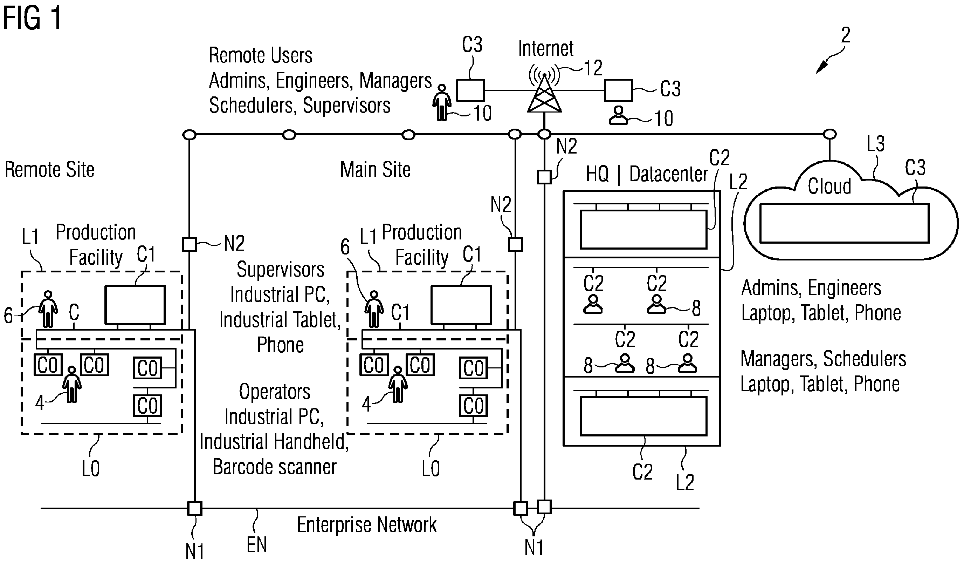

Figure 1 shows schematic overview of a manufacturing operation management system - hereinafter called MOM system 2 - that comprises a number of computational resources C0 to C3 that are organized in different computational resource layers L0 to L3. In the layer L0 - hereinafter called Digital Twin layer -at show floor level, a number of operators 4 are working in a direct Digital Twin Environment using industrial PCs, industrial handhelds, barcode scanners and the like as computational resources C0. The operators 4 require these computational resources C0 to control and monitor the industrial production processes at closest proximity to the real production operations.

In the layer L1 - hereinafter called Near Environment layer L1 - at office level, a number of operators 6 are working in at a near distance to the real production process within the plant (Main Site, Remote Site) in the function of supervisors and the like using industrial PCs, industrial tablets, smart phone and the like as computational resources C1. The operators 6 require these computational resources C1 for example to monitor the KPIs of the industrial production processes at a close proximity to the real production operations.

In the layer L2 - hereinafter called Remote Environment layer L2 - at HQ/data center level, a number of remote users 8 are working in the remote environment to the real production process in the function of administrators, IT specalists, It supporter, engineers, schedulers and managers and the like using PCs, industrial PCs, industrial tablets, smart phone and the like as computational resources C2. The remote user 8 require these computational resources C2 for example to model the production and its production steps, to schedule the production operations, to manage the data repositories used among the industrial processes, to administrate all related process data, resources, personnel, and to run an administrative enterprise resource planning system ERP and its links to the MOM system 2 and to run incident root cause analysis procedures at only a remote proximity to the real production operations.

In the layer L3 - hereinafter called Global Environment layer L3 - at global level (private or public cloud), a number of remote users 10 are working in the global environment far from the real production process in the function of CEO, CFO, departments leaders,administrators, IT specalists, engineers, schedulers, programmers and managers and the like using PCs, industrial PCs, industrial tablets, smart phone and the like as computational resources C3. The operators 10 require these computational resources C3 for example to review the KPI's, to manage the enterprise and to provide data to governmental and/or life science organisations, e.g. drug authorities (FDA), and administrate all related process data, resources, personnel, and to run an administrative enterprise resource planning system ERP and its links to the MOM system 2 at a far remote position to the real production operations.

All computational resources C0 to C3 are linked wire-borne and/or wireless to an enterprise network EN and/or the internet 12 by respective network devices N1, N2, such as routers, servers and the like.

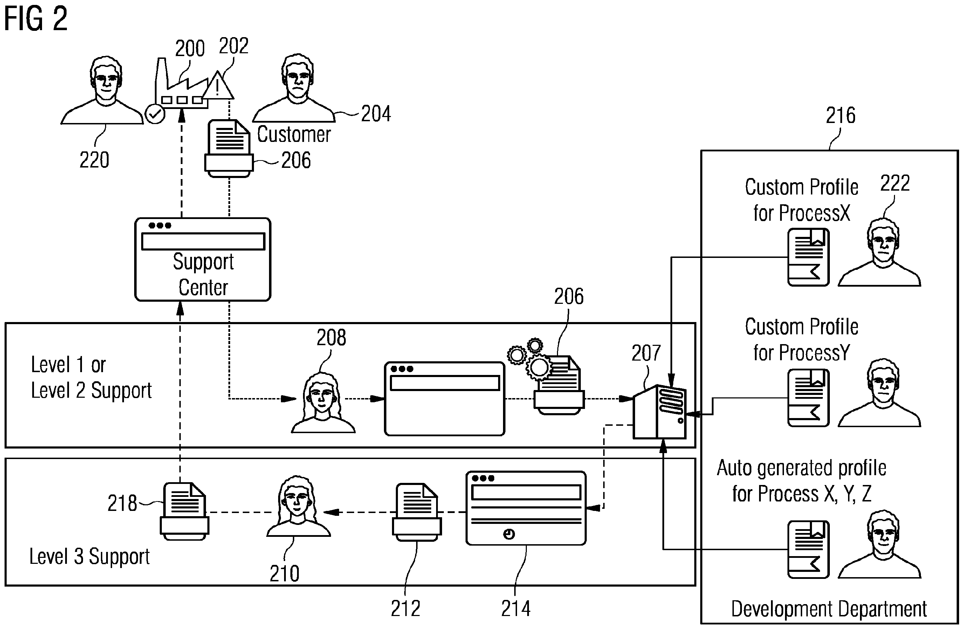

Figure 2 now shows a schematic overview of the workflow when a support enginer needs to perform an incident root cause analysis in a production facility 200. During the production, an incident stopping the production has occurred which is represented by an orange triangle 202 and a disappointed looking symbolic customer 204. Related to this incident, the software program controlling the production has generated a dump file 206 related to this incident. This dump file 206 can be uploaded by the customer over the Incident Support tool, as requested by a support engineer 208. The support engineer 208 can then upload the file, via web interface, into a data repository stored on a support server 207..

A more educated support engineer 210, located for example at level L3, can now review the dump file 206. The dump file 206can be also processed automatically by an backend service running on the server 207, to produce a readable format report 214 or can be made available as human readable .html-report 212. In addition to standard process image dump information, the support engineer 210 receives in the report 214, also additional useful context readable information, provided by decorators coded already within the business logic at coding time. The support engineer 210 can then improve and speed up the root cause analysis providing a fix to the problem or an incident mitigation report 218 to an operator 220 of the production facility 200.

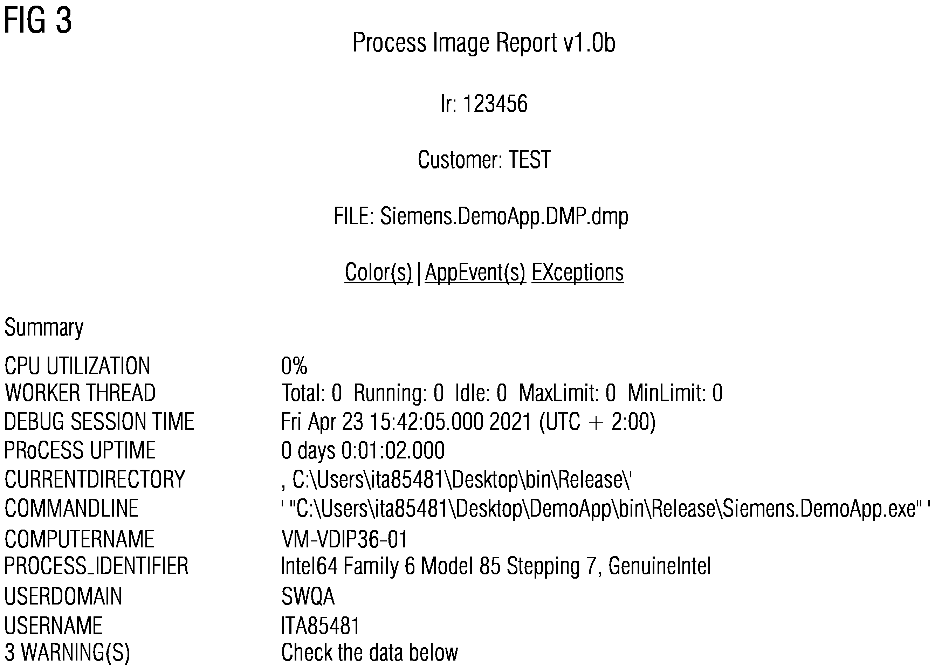

The following figures 3 to 6 illustrate an example for the proposed content of the code annotation syntax report 214.

Figure 3 shows here the section "Summary" which gives the support engineer 210 an overview of the nature of the incident that has occurred. This summary teaches the support engineer 210 in which software program the incident has occurred and displays also the presence of three warnings in the last line of this section. Thus, Figure 3 provides a proposal of code annotation syntax report 214 that could show some standard information that are already included in any image dump (here this information is presented intuitively in a readable human format). In red (dark grey), the additional the information is provided by the decorators that have been included in the code of the software routine.

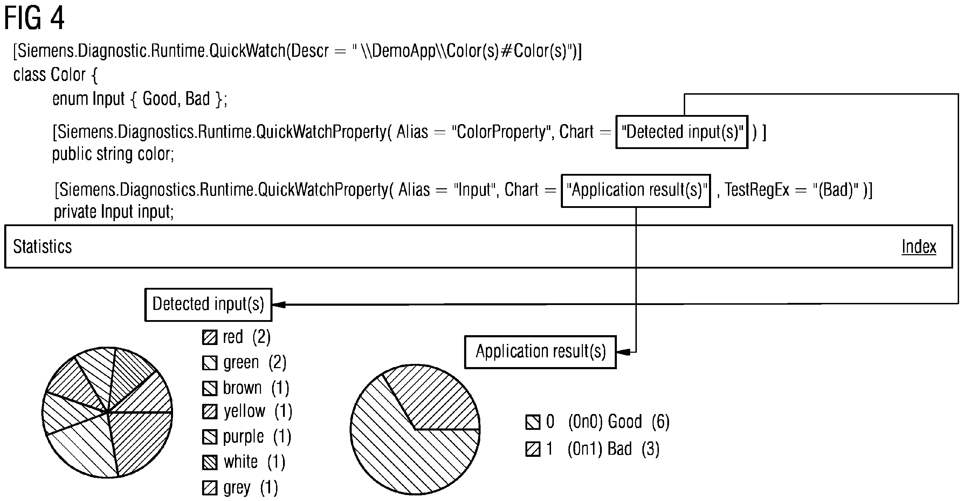

Now, the support engineer 210 gets in the section "Statistics" as shown in Figure 4 an insight on the nature of the incident. Here, this section tells the support engineer 210 that the correct presence of expected data inputs has been observed. Again, the pie-chart shows that six data inputs have been present properly as expected and that three data inputs have failed to occur. In Figure 4, some coding examples of the decorator have been added, said decorators being required to be coded in order to produce at execution runtime of the software routines and their separate additional code sections the information that is here displayed in the report.

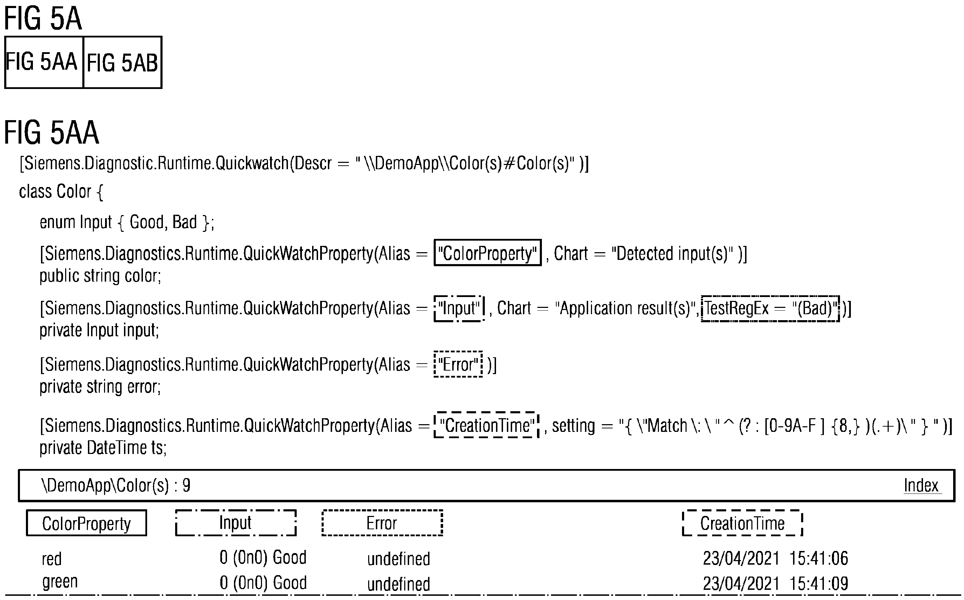

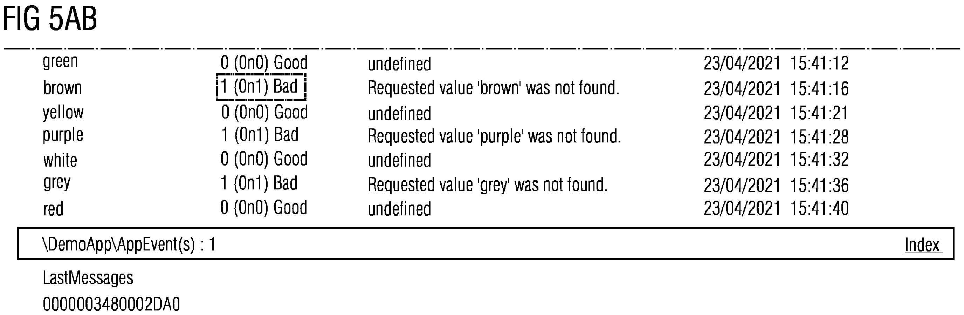

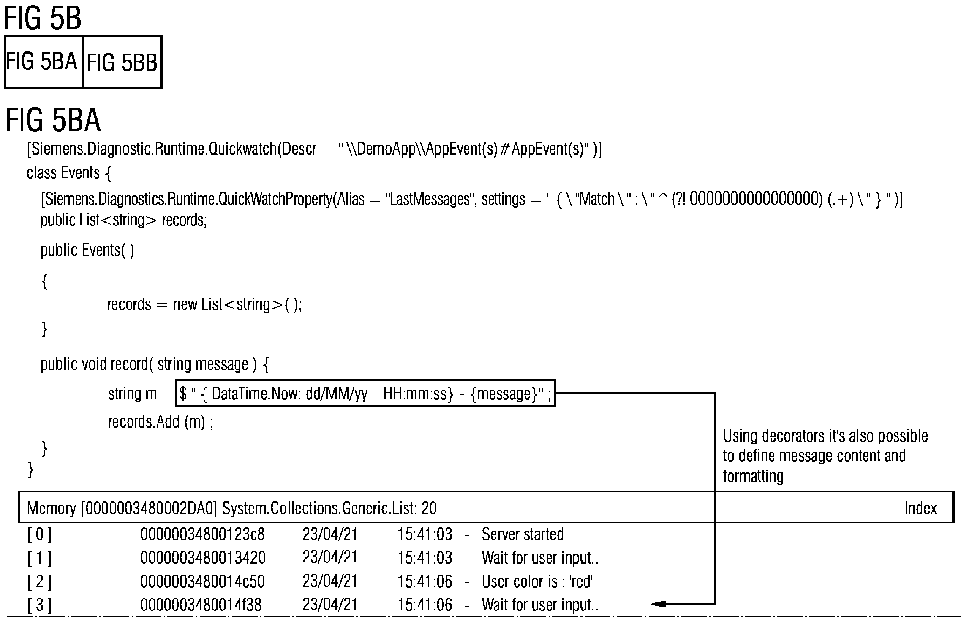

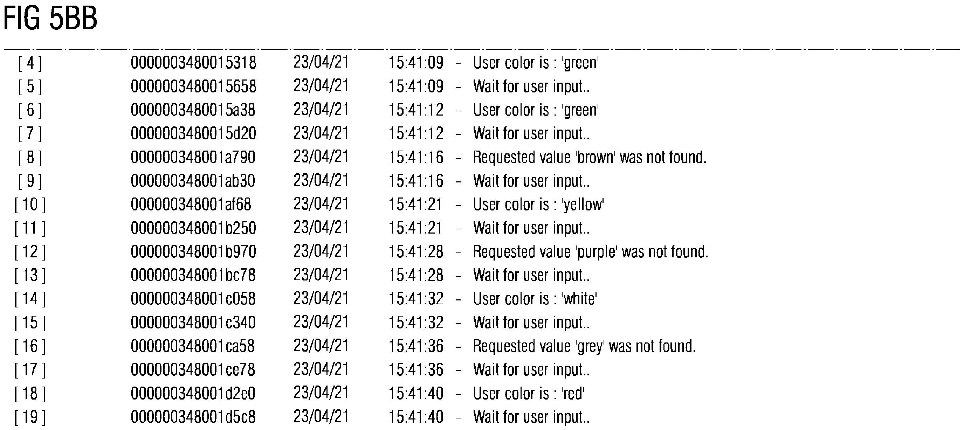

Further, the sections "Output summary" in Figure 5(a) and the section "Initial code section results" in Figure 5(b) provide the support engineer 210 an exact indication where the incident occurred. This information is here displayed as a human readable textualization teaching that the expected input values for "brown", "purple" and "grey" did not show up as expected. Thus, the software routine encoded to request the input value for "brown" has been unabled under execution to achieve its logical result of receiving the input value for "brown". The code section aligned with this software routine has been coded to provide the retrievable output "input 0 (0n0) Good" in case of the correct presence of the requested input data or the retrievalbe output "input 1 (0n1) Bad" with the textual annotation that "Requested value "brown" was not found". This retrievable output is therefore made public by a respective decorator to the separate result report that is here present a code annotation syntax report 214. Also in Figure 5, some decorator code examples were added, said examples corresponding to the information that will then be available in the dump and thus be displayed in the report.

This information, of course, is of great help to the support engineer 210 which can directly inform the operator 220 in the manufacturing facility 200 that the incident has been caused by the no-show of the input value for "brown". This operator 220 can now for example fix the sensor which has been provided to deliver the input value for "brown". Figure 5(b) additionally shows in detail where the incident eventually has occurred in the software module, here particularly when requesting the input values for "brown", "purple" and "grey".

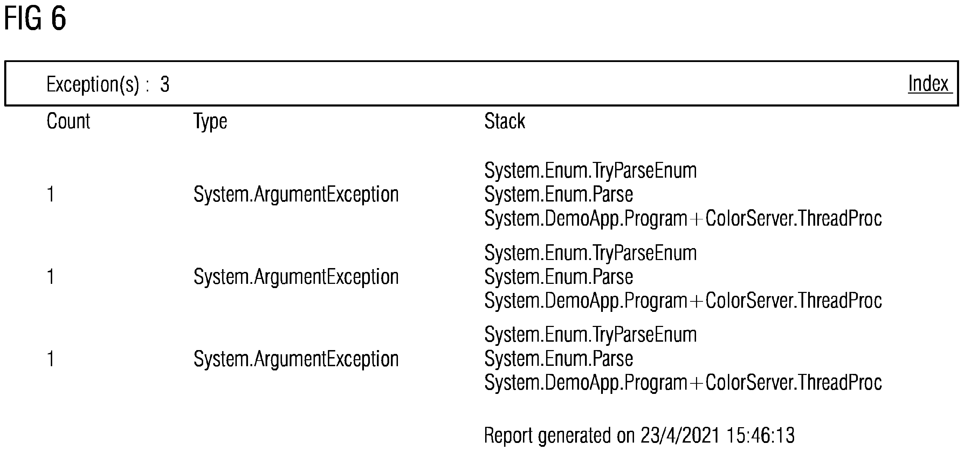

And last but not least, Figure 6 now shows the section "Exceptions" which software routines have not provided the expected logical result and thus causing the present incident. Thus, by this procedure, the definition of a formal syntax in the code section to tag the source code of the software routine allows to extract logical operations used in the business logic (the entire workflow of the software routines) and understand its status at debugging time. This mechanism here relies on decorators that are used directly in the source code of the software routine which a programmer 222 can use to tag class definitions, properties and methods that are relevant for a diagnosis and a debugging.

Similarly, as it happens with source code comments, the code decoration is written by programmers/developers who know the semantics of the business logic. Mainly, the mechanism can rely on 3 types of decorators: "class definitions", "properties" and "methods".

These decorators, in turn, can own attributes that complete their configuration and that can be used at debugging time. Exemplarily, attributes can be:
Section **→** it is used to aggregate the data
Regular expression **→** if matched, it can be used to mark for example a state, like a warning
Alias name **→** it can be used to specify a more readable information
Chart name **→** it clusters values in a chart
Max/Min instances **→** it sets the limits on the number of instances of a class type or running methods, based on which a warning can be highlighted at reporting time.

During the code building phase, the decorators can be translated by a precompiler into static metadata (contextualization). The static metadata may contain all associations among symbolic name of classes, properties and methods and their decoration.

Metadata can also be stored in an external file called "profile" or directly in the executable software routine (.exe, .dll, .jar, etc.). This process is like what is already happening for debugging symbols archived together with technical documentation in the result report.

It has to be noted that the present procedure does not have any active role during the runtime phase: the metadata just comprises the static information that has been deposited here for later use at debugging time; it does not change the original layout of the objects loaded in memory nor consume extra resources.

At debugging time, the support engineer 210 will run a debugger tool that will load this metadata (dump file 206) by the process image or external file. Then, after parsing the information, it will retrieve the business data structures in the memory using the decorators tagging logic (this are the code section aligned to the software routines). Class instances and running methods will be recognized and presented in a human-readable format, including warnings handling and statistic data, as here shown exemplarily in the code annotation syntax report 214. The metadata can here be used to automate the analysis process, to generate the diagnostic reports, KPIs, custom debugger commands, monitoring, etc. The present procedure also applies to different programming technologies.

With the content of the dump file 206 which can be automatically processed by the backend service, the code annotation syntax report 214 is generated in a few seconds as human readable report providing the information that were tagged at coding time, aggregated and now displays with warnings and alert the retrievable output information provided by the code sections (here in terms of decorators). This report 214 enables a quick review of global information saved in the memory of the process, that can be analyzed to improve and speed up problem determination.

## Claims

1. A method for enhancing the debugging capability for a software program being executed on at least one resource of an industrial environment that is controlled by a manufacturing operation management system (MOM system), said method comprising the steps of:
a) source-coding a number of software routines in order to achieve under execution of the software routine a logical result, said software routines being comprised in the software program;
b) adding to each software routine a code section indicative for the achievement of the logical result wherein said code section generates a retrievable output in response to the execution of the software routine;
c) controlling the at least one resource to execute the number of software routines; and
d) running an analysis tool being enabled to provide the retrievable outputs deducted from the execution of the number of software routines in a separate analysis report.

2. The method according to claim 1, wherein the analysis report is displayed on a GUI for debugging purposes.

3. The method according to any of the preceding claims, wherein the code section is designed as a decorator associated with the source code of the software routine, thereby tagging class definitions, properties and methods.

4. The method according to claim 3, wherein the decorator is enabled to own attributes being used to complete the configuration of the decorator and being used during a debugging.

5. The method according to claim 4, wherein the attribute is one or more of the following:
i) a section attribute that is used to aggregate input and/or output data;
ii) a regular expression attribute that is used to mark a state, like a warning or the like, if matched;
iii) an alias name attribute which is used to specify readable information in terms of contextualization;
iv) a chart name attribute being used to cluster data values in a chart; and
v) a Max/Min instance attribute being used to set the limit on a number of instances of a class type or a running method, preferably based on which instance a warning is highlighted in the analysis report.

6. The method according to any of the preceding claims 3 to 5, wherein the decorator is coded at the phase of source-coding and is translated by a pre-compiler into static metadata; said metadata preferably comprising all associations among symbolic names of classes, properties and methods and their decoration.

7. The method according to any of the preceding claims, wherein the software routine is one or more of the following operations:
a) generating a data output;
b) receiving a data input;
c) performing a logical operation on the data output and/or the data input, optionally in combination with the use of further process data.

8. The method according to any of the preceding claims, wherein the logical result is one or more of the following results:
a) indicating that a data output has been generated properly or has failed;
b) indicating that a data input has been received properly or the reception of the data input has failed; and
c) indication that the execution of the logical operation has been completed properly or has failed.
